# EUROPÄISCHE PATENTSCHRIFT

(11) **EP 3 724 559 B1**
(45) Veröffentlichungstag und Bekanntmachung des Hinweises auf die Patenterteilung: **28.06.2023**
(21) Anmeldenummer: 19706865.3
(22) Anmeldetag: 25.01.2019
(51) Int. Cl.: F25B 49/00, H02B 1/56

(54) **SCHALTSCHRANKANORDNUNG MIT EINER SICHERHEITSFUNKTION SOWIE EIN ENTSPRECHENDES VERFAHREN**
CONTROL CABINET ASSEMBLY WITH A SAFETY FUNCTION AND A CORRESPONDING METHOD
SYSTEME D'ARMOIRE ELECTRIQUE À UNE FONCTION DE SÉCURITÉ ET UN PROCÉDÉ CORRESPONDANT

(30) Priorität: 20.04.2018 DE 102018109604
(43) Veröffentlichungstag der Anmeldung: 21.10.2020
(73) Patentinhaber: Rittal GmbH & Co. KG, 35745 Herborn (DE)
(72) Erfinder: HEIMBERG, Thorsten, 35641 Schöffengrund (DE); WAGNER, Steffen, 57299 Burbach (DE)
(74) Vertreter: Angerhausen, Christoph
(86) Internationale Anmeldenummer: PCT/DE2019/100080
(87) Internationale Veröffentlichungsnummer: WO 2019/201372

(56) Entgegenhaltungen:
- EP-A1- 3 029 397
- WO-A1-2015/189135
- DE-A1-102009 029 392
- DE-B3-102004 030 785

## Beschreibung

Die Erfindung geht aus von einer Schaltschrankanordnung mit mindestens einem Schaltschrankgehäuse und mindestens einem Kühlgerät zur Kühlung von in der Schaltschrankanordnung aufgenommener Luft, wobei das Kühlgerät mindestens einen Kältemittelkreislauf aufweist, der ein brennbares Kältemittel aufweist. Eine derartige Schaltschrankanordnung ist aus der EP 3 029 397 A1 bekannt, wobei der das Kältemittel aufweisende Kältemittelkreislauf eine Verdichtereinheit und eine Verflüssigereinheit aufweist und die in der Schaltschrankanordnung anfallende Wärme über die Verdampfereinheit der in der Schaltschrankanordnung aufgenommenen Luft entzogen wird. Ferner weist die Schaltschrankanordnung mindestens einen Kältemittelsensor weist, der eine Konzentration des brennbaren Kältemittels in der in der Schaltschrankanordnung aufgenommenen Luft erfasst und von einer Steuereinheit ausgewertet wird, wobei die Steuereinheit dazu eingerichtet ist, bei einem Überschreiten eines Grenzwertes der Konzentration eine Sicherheitsfunktion zur Absenkung der Konzentration des brennbaren Kältemittels in der Luft unter den Grenzwert auszulösen. Eine ähnliche Kühlanordnung für Schaltschränke ist auch aus der DE 10 2004 030785 B3 und aus der DE 10 2004 057 432 B4 bekannt. Eine Sicherheitsvorrichtung für eine Kälteanlage mit einem ein entzündliches Kältemittel enthaltenden Kältemittelkreislauf ist ferner aus der WO 2015/189135 A1 sowie der DE 10 2009 029392 A1 bekannt.

Im Leckagefall des Kältemittelkreislaufs kann das brennbare Kältemittel an die in der Schaltschrankanordnung aufgenommene Luft freigesetzt werden und insbesondere auch in das Schaltschrankgehäuse eintreten, innerhalb welches üblicherweise elektronische Komponenten einer elektrischen Schaltanlage aufgenommen sind. Diese elektronischen Komponenten können im Betrieb der Schaltanlage Lichtbögen zünden, an welchen sich das Kältemittel-Luft-Gemisch entzünden kann.

Nach der Maschinenrichtlinie 2006-42-EG ist es erforderlich, dass von den in einer Maschine verwendeten Gasen keine Explosions- und Brandgefahr ausgeht. Zudem ist nach der verpflichtenden Risikoanalyse nach EN 12100 §5.4. b) zwingend davon auszugehen, dass im Betrieb der Schaltschrankanordnung und insbesondere des Kühlgeräts einzelne Bauteile dieser versagen können. Weist bei einem Schaltschrankkühlgerät ein kältemittelführendes Bauteil ein Leck auf und vermischt sich brennbares Kältemittel aus dem Kältemittelkreis mit der in der Schaltschrankanordnung aufgenommene Luft, ist davon auszugehen, dass brennbares Kältemittelgas in den Schaltschrank gelangt und sich dort an Einbauten, die im Betrieb Lichtbögen zünden, entzünden kann. Zur Behebung dieses Problems ist es aus der DE 10 2004 057 432 B4 bekannt, als Kältemittel CO₂ oder Wasser zu verwenden. Nicht brennbare Kältemittel weisen jedoch häufig eine geringere Wärmekapazität als brennbare Kältemittel auf, weshalb es grundsätzlich wünschenswert ist, Kühlgeräte mit brennbaren Kältemitteln zu betreiben.

Es ist daher die Aufgabe der Erfindung, eine Schaltschrankanordnung der eingangs beschriebenen Art derart weiterzuentwickeln, dass die Entzündung von im Leckagefall in der Schaltschrankanordnung entweichenden brennbaren Kältemitteln vermieden wird.

Die vorliegende Erfindung ist in den unabhängigen Ansprüchen 1 und 7 offenbart. Vorteilhafte Ausführungsformen der Erfindung sind jeweils Gegenstand der abhängigen Ansprüche.

Der Grenzwert kann beispielsweise danach bestimmt sein, dass die Bildung eines entzündlichen stöchiometrischen Verhältnisses zwischen brennbarem Kältemittel und der in der Schaltschrankanordnung enthaltenen Luft beziehungsweise des Sauerstoffanteils der Luft verhindert wird. Der Grenzwert kann jedoch auch so gering gewählt werden, dass auch eine viel geringere Konzentration bereits die Sicherheitsfunktion auslöst. Da das von der Schaltschrankanordnung aufgenommene Luftvolumen bekannt ist über den Anstieg der Konzentration auf das Ausmaß des Lecks geschlossen und gegebenenfalls danach die einzuleitende Sicherheitsfunktion aus einer Mehrzahl vorhandener Sicherheitsfunktionen ausgewählt werden.

Die Kältemittelsensoren können genau einen Gassensor mit einer einkanaligen Signalausgabe oder mehrere redundante Gassensoren aufweisen, die eine einkanalige Signalausgabe aufweisen. Der Sensor kann beispielsweise ein einkanaliger Sensor sein, der empfindlich auf brennbare Kältemittel wie r32, r1234yf, r1234ze, Propan, Butan und dergleichen reagiert. Alternativ können Sensoren verwendet werden, die empfindlich auf mindestens ein brennbares Kältemittel reagieren, etwa eines der zuvor beispielhaft genannten. Die Sensoren können redundant zur Gassensorik eingesetzt werden, wobei die Sensoren ihr Signal einkanalig ausgeben. Als Sensor können zwei einkanalige nicht dispersive Infrarotsensoren (NDIR) verwendet werden, die empfindlich auf das brennbare Kältemittel reagieren, beispielsweise auf eines der zuvor beispielhaft genannten Kältemittel.

Der Wärmetauscher ist ein Luft-Kältemittel-Wärmetauscher, der an seiner Anströmseite einen ersten der beiden Kältemittelsensoren und an seiner Abströmseite einen zweiten der beiden Kältemittelsensoren aufweist. Die Sicherheitsfunktion weist einen Verschlussmechanismus des Kühlgeräts auf, über den ein zum Schaltschrankinnern geöffneter Lufteinlass des Kühlgeräts und ein zum Schaltschrankinnern geöffneter Luftauslass des Kühlgerätes verschlossen werden kann. So ist es möglich, im Leckagefall bei Bedarf beide Luftdurchlassöffnungen zwischen Luftinnenkreis des Kühlgeräts und dem Schaltschrankinnern zu verschließen, um das Eintreten des brennbaren Kältemittels in den Schaltschrankinnenraum, wo sich die elektronischen Komponenten befinden, zu vermeiden.

Die Sicherheitsfunktion weist weiterhin einen Belüftungsmechanismus mit mindestens einem zwischen einem Luftinnenkreis und einem Luftaußenkreis des Kühlgeräts zwischen einer Offenstellung und einer Schließstellung verschließbaren Schließorgan auf, wobei in der Schließstellung des Schließorgans der Luftaußenkreis und der Luftinnenkreis fluidisch voneinander getrennt sind, und wobei in der Offenstellung des Schließorgans Umgebungsluft von dem Luftaußenkreis in den Luftinnenkreis und aus dem Luftinnenkreis in den Luftaußenkreis und von dort in die Umgebung der Schaltschrankanordnung abgeführt ist.

Mit Hilfe des Schließorgans kann ein Luftkurzschluss zwischen dem Luftinnenkreis und dem Luftaußenkreis des Kühlgerätes hergestellt werden, die im Normalbetrieb des Kühlgeräts fluidisch voneinander getrennt sind. Über den Luftkurzschluss ist es möglich, die das Kältemittel enthaltene Luft im Innern der Schaltschrankanordnung aus der Schaltschrankanordnung herauszuführen, wozu gegebenenfalls die Lüfter des Klimageräts für den Lufttransport verwendet werden können.

Der in dem Luftinnenkreis angeordnete Luft-Kältemittel-Wärmetauscher des Kältemittelkreislaufs kann den Luftinnenkreis in einen einer Anströmseite des Luft-Kältemittel-Wärmetauschers zugewandten Abschnitt und einen einer Abströmseite des Luft-Kältemittel-Wärmetauschers zugewandten Abschnitt unterteilen, wobei der Luftaußenkreis über ein erstes Schließelement des Schließorgans zu dem der Anströmseite des Luft-Kältemittel-Wärmetauschers zugewandten Abschnitt geöffnet werden kann und wobei der Luftaußenkreis über ein zweites Schließelement des Schließorgans zu dem der Abströmseite des Luft-Kältemittel-Wärmetauschers zugewandten Abschnitt geöffnet werden kann.

Die Sicherheitsfunktion weist einen Be- und Entlüftungsmechanismus auf, über den die Schaltschrankanordnung mit Umgebungsluft belüftet und die in der Schaltschrankanordnung aufgenommene Luft in die Umgebung der Schaltschrankanordnung abgeführt ist. Mithilfe des Be- und Entlüftungsmechanismus kann im Versagensfall des Kühlgeräts, der in der Regel mit der Leckage des Kühlgeräts einhergeht, eine Notkühlung der in der Schaltschrankanordnung aufgenommenen Luft bereitgestellt sein.

Die Sicherheitsfunktion kann ein von der Steuereinheit angesteuertes Ausblasventil des Kältemittelkreislaufs aufweisen, über das das brennbare Kältemittel in den Luftaußenkreis des Kühlgeräts ausgeblasen ist.

Die Sicherheitsfunktion kann weiterhin eine Inertgaszufuhr aufweisen, die zum Innern der Schaltschrankanordnung über ein von der Steuereinheit angesteuertes Ventil geöffnet werden kann. Das Inertgas kann im Falle einer detektierten Grenzwertüberschreitung dazu verwendet werden, das in dem Schaltschrankinnern enthaltene Gasgemisch soweit zu verdünnen, dass eine Entzündung des Gasgemischs nicht möglich ist.

Die Schaltschrankanordnung weist weiterhin einen Luftauslass für die im Innern der Schaltschrankanordnung aufgenommene Luft mit der Konzentration des brennbaren Kältemittels auf. Dem Luftauslass kann ein Lüfter beigeordnet sein, um den Lufttransport aus dem Inneren der Schaltschrankanordnung in die Umgebung der Schaltschrankanordnung zu begünstigen.

Die Sicherheitsfunktion kann eine von der Steuereinheit angesteuerte Abschaltfunktion für einen Verdichter des Kühlgeräts und/oder für einen Lüfter im Luftinnenkreis des Kühlgeräts aufweisen. Durch die Abschaltfunktion kann das Austreten weiteren Kältemittels aus dem Kältemittelkreislauf und damit das Eintreten des Kältemittels in den Schaltschrankinnenraum verhindert werden.

Da die vom Verdichter aufgenommene Leistung vom Massenstrom des Kältemittels durch den Kältemittelkreislauf und von der Druckdifferenz des Kältemittels zwischen dem Innenkreis und de Außenkreis abhängt, kann anhand deren Überwachung auf eine Leckage des Kältemittelkreislaufs geschlossen werden. Ebenso verschiebt eine Leckage die charakteristischen Punkte des Carnot-Kreisprozesses, wodurch eine Leckage des Kältemittelkreislaufs erfasst werden kann.

Weitere Einzelheiten der Erfindung werden anhand der nachstehenden Figuren erläutert. Dabei zeigt:
- Figur 1: eine Schaltschrankanordnung nach dem Stand der Technik in schematischer Darstellung;
- Figuren 2 bis 5: verschiedene Beispiele von Schaltschrankanordnungen in schematischer Darstellung, die nicht zur Erfindung gehören; und
- Figuren 6 und 7: eine erfindungsgemäße Ausführungsform.

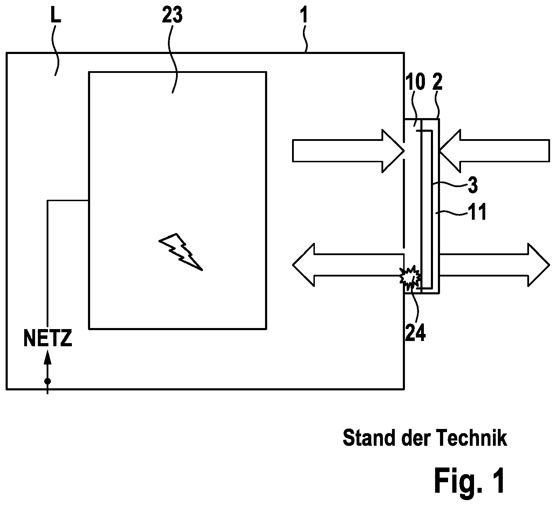

Die in Figur 1 gezeigte Schaltschrankanordnung nach dem Stand der Technik weist ein Schaltschrankgehäuse 1 mit einem daran montierten Kühlgerät 2 auf. Insbesondere kann eine Schaltschrankanordnung auch mehrere Schaltschränke 1 aufweisen, die beispielsweise eine Schaltschrankreihe bilden. Ebenso können mehrere Kühlgeräte 2 vorgesehen sein, oder auch Kühlgeräte, die als Inline-Kühlgeräte in eine Schaltschrankreihe integriert sind.

In dem Schaltschrankgehäuse 1 ist üblicherweise eine elektrische Schaltanlage 23 aufgenommen, die Bauteile aufweisen kann, die im Betrieb Lichtbögen zünden. Der Luftinnenkreis 10 des Kühlgeräts 2 und der Innenraum des Schaltschrankgehäuses 1 bilden ein Luftvolumen L, welches gegenüber dem Außenkreis 11 und damit auch zur Umgebung der Schaltschrankanordnung fluidisch abgetrennt ist. In dem Luftinnenkreis 10 ist ein Verdampfer (nicht dargestellt) des Kältemittelkreislaufs 3 des Kühlgeräts 2 aufgenommen, um die durch den Luftinnenkreis des Kühlgeräts 2 hindurch transportierte Luft abzukühlen. Weist beispielsweise der Verdampfer oder die Verrohrung des Kältemittelkreislaufs 3, soweit sie im Luftinnenkreis 10 aufgenommen ist, eine Leckage 24 auf, so kann Kältemittel in das Luftvolumen L im Schaltschrankinnenraum eintreten. Wenn das Kältemittel ein brennbares Kältemittel ist, so kann sich im Schaltschrankinnenraum ein brennbares Luft-Kältemittel-Gemisch bilden, welches sich an der elektrischen Schaltanlage 23 aufgrund der beschriebenen Lichtbögen entzünden kann.

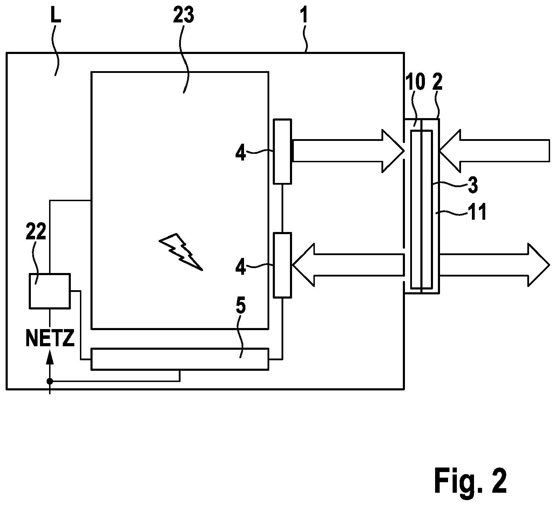

Demgegenüber ist in Figur 2 ein nicht zur Erfindung gehörendes Beispiel gezeigt, das zusätzlich zwei Kältemittelsensoren 4 aufweist, die eine Konzentration des in dem Kältemittelkreislauf 3 enthaltenen brennbaren Kältemittels in der Luft im Inneren der Schaltschrankanordnung erfassen. Die Messsignale der Sensoren 4 werden von einer Steuereinheit 5 ausgewertet, die dazu eingerichtet ist, bei einem Überschreiten eines Grenzwerts für die Konzentration des brennbaren Kältemittels in der Luft im Inneren der Schaltschrankanordnung eine Sicherheitsfunktion auszulösen, die dazu ausgelegt ist, die Konzentration des brennbaren Kältemittels in der Luft im Inneren der Schaltschrankanordnung unter den Grenzwert abzusenken. Der Grenzwert kann insbesondere danach ausgewählt sein, dass er eine Mindestkonzentration darstellt, welche für die Entzündung des in der Luft enthaltenen Kältemittels erforderlich ist. Der Grenzwert kann aber auch so niedrig eingestellt sein, dass faktisch lediglich eine Präsenzprüfung des Kältemittels, also eine qualitative Untersuchung des Luftvolumens L durchgeführt wird.

Bei dem Beispiel gemäß Figur 2 ist die Steuereinheit 5 mit einem Netzschalter 22 verschaltet, welcher auf Befehl der Steuereinheit 5 die Schaltanlage 23 stromlos schalten kann, so dass die Bildung von Lichtbögen verhindert und damit die Gefahr der Entzündung des in der Schaltschrankanordnung aufgenommene Luft-Gas-Gemisches verhindert wird.

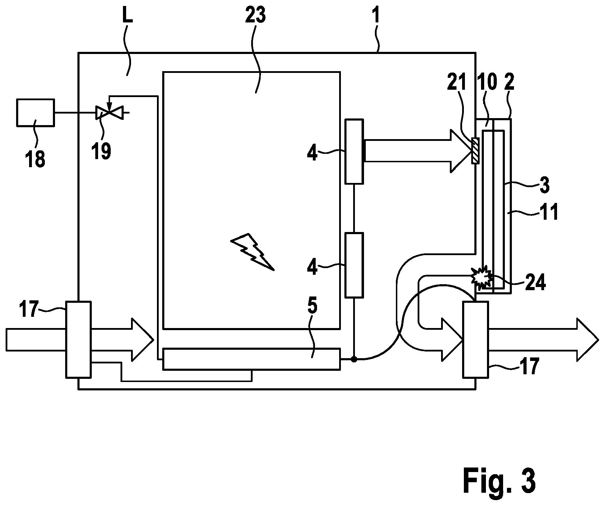

Analog zum in Figur 2 gezeigten Beispiel ist bei dem Beispiel gemäß Figur 3 wiederum ein erster Sensor 4 im Lufteinlassstrom des Kühlgeräts 2 und ein zweiter Sensor 4 darunter im Luftauslassstrom des Kühlgeräts angeordnet. Das Steuergerät 5, welches mit den Sensoren 4 verschaltet ist, steuert einen Be- und Entlüftungsmechanismus 17 an. Dieser kann beispielsweise einen Lüfter aufweisen, welcher Luft aus der Umgebung der Schaltschrankanordnung in das Innere der Schaltschrankanordnung, insbesondere in den Schaltschrankinnenraum mit den elektronischen Komponenten 23 einbläst. Der Be- und Entlüftungsmechanismus 17 kann weiterhin einen Luftauslass aufweisen, über welchen die mit dem Kältemittelgas versetzte Luft L aus dem Inneren der Schaltschrankanordnung in die Umgebung der Schaltschrankanordnung ausgeblasen wird. Der Luftauslass ist vorzugsweise dem Kühlgerät 2 beigeordnet, während der Lüfter für die Lufteinblasung aus der Umgebung in das Innere der Schaltschrankanordnung entfernt von dem Luftauslass angeordnet ist. Vorzugsweise sind die elektrischen Komponenten 23 in Luftströmungsrichtung zwischen dem Lufteinlass und dem Luftauslass zwischen den beiden angeordnet, so dass bei dem Kühlgerät 2 beigeordnetem Luftauslass aus dem Kühlgerät 2 austretendes Kühlgerätegas von den elektronischen Komponenten 23 ferngehalten wird.

Anstelle einer Lufteinblasung kann der Be- und Entlüftungsmechanismus 17 auch eine Luftausblasung aufweisen. Dabei ist der Lüfter der Luftauslassöffnung des Be- und Entlüftungsmechanismus 17 beigeordnet. Es ist auch denkbar, dass sowohl eine Lufteinlassöffnung als auch eine Luftauslassöffnung des Be- und Entlüftungsmechanismus 17 jeweils einen Lüfter aufweist.

Weiterhin steuert die Steuereinheit 5 ein Ventil 19 einer Inertgaszufuhr 18 an, über die ein Invertgas in die Schaltschrankanordnung eingeblasen wird, um die Anreicherung des Kältemittels zu hemmen und damit die Bildung eines brennbaren Gasgemisches zu verhindern.

Grundsätzlich sind jedoch die beiden im Beispiel gemäß Figur 3 gezeigten Sicherheitsfunktionen unabhängig voneinander realisierbar.

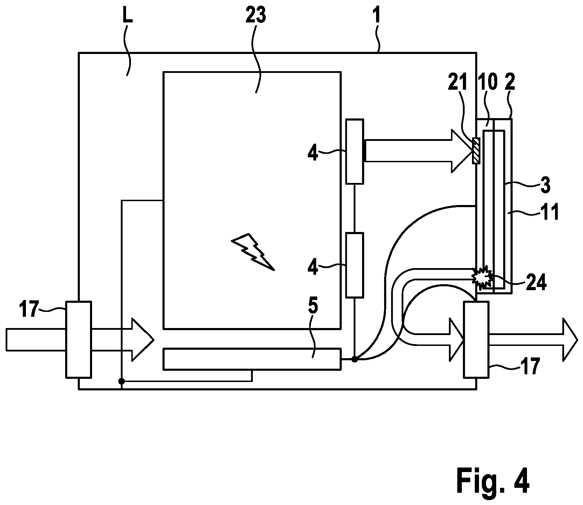

Das in Figur 4 gezeigte und nicht zur Erfindung gehörende Beispiel weist neben dem bereits mit Bezug auf Figur 3 beschriebenen Be- und Entlüftungsmechanismus 17 eine Ansteuerung des Kühlgeräts 2 durch die Steuereinheit 5 auf. Demgemäß ist die Steuereinheit 5 dazu eingerichtet, bei der Erfassung einer Grenzwertüberschreitung der Konzentration des Kältemittels in der Luft L im Inneren der Schaltschrankanordnung das Kühlgerät 2 zu deaktivieren. Dies kann insbesondere eine Deaktivierung des Lüfters 21 im Luftinnenkreislauf des Kühlgeräts 2 umfassen und/oder die Deaktivierung des Verdichters des Kältemittelkreislaufs 3. Das trotz Deaktivierung des Kühlgeräts 2 noch aus dem Kühlgerät 2 austretende Kältemittelgas kann über den Be- und Entlüftungsmechanismus 17 aus dem Inneren der Schaltschrankanordnung an die Umgebung der Schaltschrankanordnung abgeführt werden.

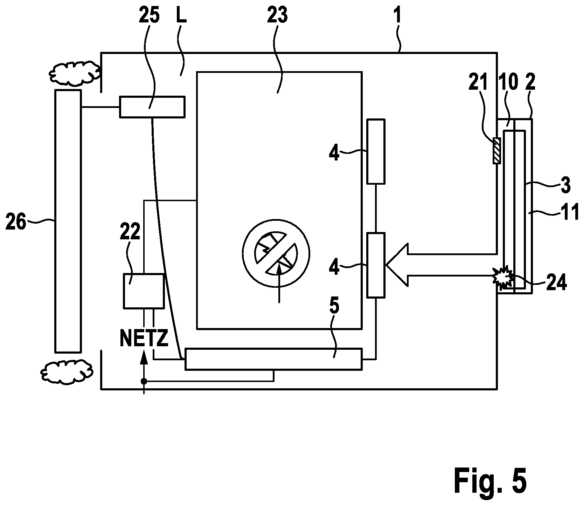

Bei dem in Figur 5 gezeigten und nicht zur Erfindung gehörenden Beispiel ist neben der bereits mit Bezug auf die Ausführungsform gemäß Figur 2 beschriebenen Netzabschaltung 22 weiterhin ein Türöffnungsmechanismus 25 realisiert, welcher von der Steuereinheit 5 angesteuert wird, eine Schaltschranktür 26 der Schaltschrankanordnung 1 zu öffnen, wenn eine Grenzwertüberschreitung der Konzentration des Kältemittels in der Luft L im Schaltschrankinneren erfasst worden ist. Der Türöffnungsmechanismus 25 kann einen Stellmotor aufweisen, der von der Steuereinheit 5 angesteuert wird, die Schaltschranktür 26 zu öffnen, wenn eine Überschreitung des Grenzwertes mit Hilfe der Sensoren 4 erfasst worden ist. Geeignete Türöffnungsmechanismen sind beispielsweise für den Schutz der Schaltanlage vor Überhitzung im Versagensfall der Klimatisierung bekannt.

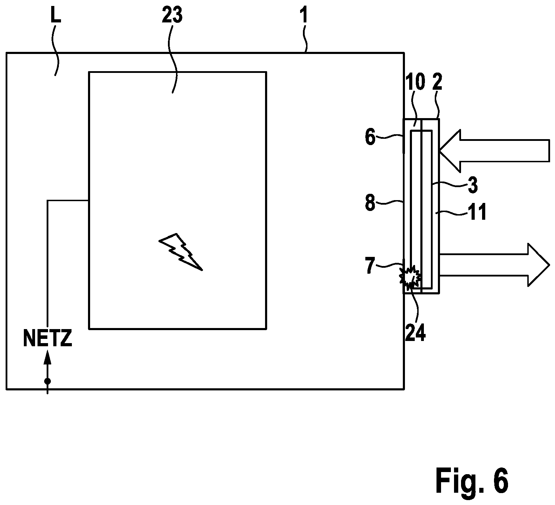

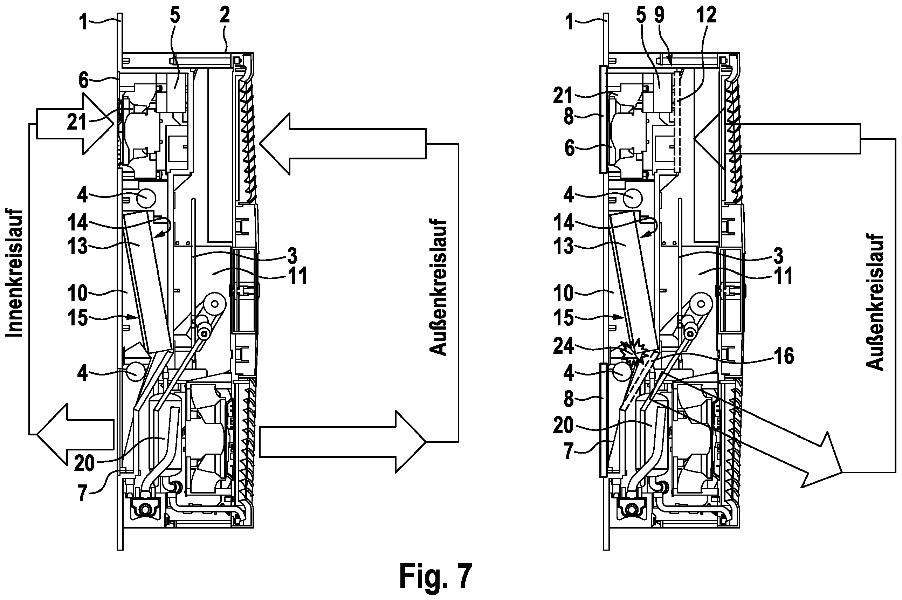

Die Figur 6 zeigt eine erfindungsgemäße Ausführungsform, die alle technischen Merkmale des unabhängigen Anspruchs 1 offenbart, bei der sämtliche für die Realisierung der erfindungsgemäßen Schaltschrankanordnung erforderlichen Komponenten in dem Kühlgerät 2 aufgenommen sind. Es sind somit keine baulichen Änderungen an dem Schaltschrankgehäuse 1 erforderlich. Weitere Einzelheiten über den Aufbau des Kühlgeräts 2 sind in Figur 7 gezeigt. Demgemäß weist das Kühlgerät 2 einen Verschlussmechanismus 8 auf, über den ein zum Schaltschrankinneren geöffneter Lufteinlass 6 des Kühlgeräts und ein zum Schaltschrankinneren geöffneter Luftauslass 7 des Kühlgeräts 2 verschlossen werden kann. Lufteinlass 6 und Luftauslass 7 können über separate Schließmittel wie Klappe oder Schieber des Verschlussmechanismus 8 unabhängig voneinander verschließbar sein.

Das Kühlgerät 2 weist weiterhin einen Belüftungsmechanismus 9 auf, der ein zweigeteiltes Schließorgan 12, 16 zwischen dem Luftinnenkreis 10 und dem Luftaußenkreis 11 des Kühlgeräts 2 aufweist. In der Schließstellung des Schließorgans 12, 16 sind der Luftaußenkreis 11 und der Luftinnenkreis 10 fluidisch voneinander getrennt. In der Offenstellung des Schließorgans 12, 16 kann Umgebungsluft von dem Luftaußenkreis 11 in den Luftinnenkreis 10 und aus dem Luftinnenkreis 10 in den Luftaußenkreis 11 abgeführt werden. Über den Luftaußenkreis 11 kann die aus dem Luftinnenkreis in den Luftaußenkreis gelangte Luft in die Umgebung der Schaltschrankanordnung abgeleitet werden.

In dem Luftinnenkreis 10 ist ein Luft-Kältemittel-Wärmetauscher 13 des Kältemittelkreislaufs 3 angeordnet. Der Wärmetauscher 13 weist an seiner Anströmseite 14 einen ersten Sensor 4 und an seiner Abströmseite 15 einen zweiten Sensor 4 auf. Der Luftaußenkreis 11 ist über ein erstes Schließelement 12 des Schließorgans zu dem der Anströmseite des Luft-Kältemittel-Wärmetauscher 13 zugewandten Abschnitt öffenbar. Weiterhin ist der Luftaußenkreis 11 über ein zweites Schließelement 16 zu dem der Abströmseite des Luft-Kältemittel-Wärmetauschers 13 zugewandten Abschnitt öffenbar.

Im Falle einer mit Hilfe der Sensoren 4 detektierten Leckage 24 kann das ebenfalls im Inneren des Geräts 2 angeordnete Steuergerät 5 einen Verschlussmechanismus 8 ansteuern, sämtliche Luftdurchgangsöffnungen zwischen dem Innenkreis 10 des Kühlgeräts 2 und dem Inneren des Schaltschrankgehäuses abzuschließen, während die Schließelemente 12, 16 geöffnet werden, so dass ein Luftkurzschluss zwischen dem Innenkreis 10 und dem Außenkreis 11 des Kühlgeräts 2 hergestellt wird.

Mit Hilfe der Lüfter des Kühlgeräts 2 kann dann Umgebungsluft über eine Lufteinlassöffnung in den Außenkreis 11 eingesogen, durch das erste Schließelement 12 in den Luftinnenkreis 10 eingeblasen und durch den Luftinnenkreis 10 und den Luftwärmetauscher 13 hindurchgeleitet werden, um an einer Abströmseite 15 des Wärmetauschers 13 durch ein zweites Schließelement 16 aus dem Innenkreis 10 wieder in den Außenkreis 11 zu gelangen und dort über eine Luftauslassöffnung des Luftaußenkreises 11 aus dem Kühlgerät 2 in die Umgebung der Schaltschrankanordnung zu gelangen.

### Bezugszeichenliste

- 1: Schaltschrankgehäuse
- 2: Kühlgerät
- 3: Kältemittelkreislauf
- 4: Kältemittelsensor
- 5: Steuereinheit
- 6: Lufteinlass
- 7: Luftauslass
- 8: Verschlussmechanismus
- 9: Belüftungsmechanismus
- 10: Luftinnenkreis
- 11: Luftaußenkreis
- 12: Erstes Schließelement
- 13: Luft-Kältemittel-Wärmetauscher
- 14: Anströmseite
- 15: Abströmseite
- 16: Zweites Schließelement
- 17: Be- und Entlüftungsmechanismus
- 18: Invertgaszufuhr
- 19: Ventil
- 20: Verdichter
- 21: Lüfter
- 22: Netzschalter
- 23: Elektrische Schaltanlage
- 24: Leckage
- 25: Türöffnungsmechanismus
- 26: Schaltschranktür
- L: Luft

## Patentansprüche

1. Schaltschrankanordnung mit mindestens einem Schaltschrankgehäuse (1) und mindestens einem Kühlgerät (2) zur Kühlung von in der Schaltschrankanordnung aufgenommener Luft, wobei das Kühlgerät (2) mindestens einen Kältemittelkreislauf (3) aufweist, der ein brennbares Kältemittel aufweist, wobei die Schaltschrankanordnung zwei Kältemittelsensoren (4) aufweist, die eine Konzentration des brennbaren Kältemittels in der Luft erfassen und von einer Steuereinheit (5) ausgewertet sind, die dazu eingerichtet ist, bei einem Überschreiten eines Grenzwertes der Konzentration eine Sicherheitsfunktion zur Absenkung der Konzentration des brennbaren Kältemittels in der Luft unter den Grenzwert auszulösen, wobei die Sicherheitsfunktion einen Verschlussmechanismus (8) des Kühlgeräts (2) aufweist, über den ein zum Schaltschrankinnern geöffneter Lufteinlass (6) des Kühlgeräts (2) und ein zum Schaltschrankinnern geöffneter Luftauslass (7) des Kühlgeräts (2) verschlossen werden kann,
wobei die Sicherheitsfunktion weiterhin einen Belüftungsmechanismus (9) mit mindestens einem zwischen einem Luftinnenkreis (10) und einem Luftaußenkreis (11) des Kühlgeräts (2) zwischen einer Offenstellung und einer Schließstellung verstellbaren Schließorgan (12, 16) aufweist, wobei in der Schließstellung des Schließorgans (12, 16) der Luftaußenkreis (11) und der Luftinnenkreis (10) fluidisch voneinander getrennt sind, und wobei in der Offenstellung des Schließorgans (12, 16) Umgebungsluft von dem Luftaußenkreis (11) in den Luftinnenkreis (10) und aus dem Luftinnenkreis (10) in den Luftaußenkreis (11) und von dort in die Umgebung der Schaltschrankanordnung abgeführt ist,
wobei die Sicherheitsfunktion einen Be- und Entlüftungsmechanismus (17) aufweist, über den die Schaltschrankanordnung mit Umgebungsluft belüftet und die in der Schaltschrankanordnung aufgenommene Luft in die Umgebung der Schaltschrankanordnung abgeführt ist,
wobei in dem Luftinnenkreis (10) ein Luft-Kältemittel-Wärmetauscher (13) des Kältemittelkreislaufs (3) angeordnet ist, der an seiner Anströmseite (14) einen ersten der beiden Kältemittelsensoren (4) und an seiner Abströmseite (15) einen
zweiten der beiden Kältemittelsensoren (4) aufweist,
und wobei im Falle einer mithilfe der Kältemittelsensoren (4) detektierten Leckage (24) die ebenfalls im Innern des Kühlgeräts (2) angeordnete Steuereinheit (5) den Verschlussmechanismus (8) ansteuern kann, sämtliche Luftdurchgangsöffnungen (6, 7) zwischen dem Innenkreis (10) des Kühlgeräts (2) und dem Innern des Schaltschrankgehäuses (1) abzuschließen, während der Schließorgan (12,16) des Belüftungsmechanismus (9) geöffnet wird, so dass ein Luftkurzschluss zwischen dem Innenkreis (10) und dem Außenkreis (11) des Kühlgeräts (2) hergestellt wird.

2. Schaltschrankanordnung nach Anspruch 1, bei der die Kältemittelsensoren (4) genau einen Gassensor mit einer einkanaligen Signalausgabe oder mehrere redundante Gassensoren aufweisen, die eine einkanalige Signalausgabe aufweisen.

3. Schaltschrankanordnung nach Anspruch 1 oder 2, bei der die Kältemittelsensoren (4) an einem zum Schaltschrankinnern geöffneten Lufteinlass (6) des Kühlgeräts und an einem zum Schaltschrankinnern geöffneten Luftauslass (7) des Kühlgeräts (2) angeordnet sind.

4. Schaltschrankanordnung nach Anspruch 1, bei der der Luft-Kältemittel-Wärmetauscher (13) des Kältemittelkreislaufs (3) den Luftinnenkreis (10) in einen einer Anströmseite (14) des Luft-Kältemittel-Wärmetauschers (13) zugewandten Abschnitt und einen einer Abströmseite (15) des Luft-Kältemittel-Wärmetauschers (13) zugewandten Abschnitt unterteilt, wobei der Luftaußenkreis (11) über ein erstes Schließelement (12) des Schließorgans (12, 16) zu dem der Anströmseite (14) des Luft-Kältemittel-Wärmetauscher (13) zugewandten Abschnitt öffenbar ist, und wobei der Luftaußenkreis (11) über ein zweites Schließelement (16) des Schließorgans (12, 16) zu dem der Abströmseite (15) des Luft-Kältemittel-Wärmetauschers (13) zugewandten Abschnitt öffenbar ist.

5. Schaltschrankanordnung nach einem der vorangegangen Ansprüche, bei der die Sicherheitsfunktion eine Inertgaszufuhr (18) aufweist, die zum Innern der Schaltschrankanordnung über ein von der Steuereinheit (5) angesteuertes Ventil (19) öffenbar ist.

6. Schaltschrankanordnung nach einem der vorangegangen Ansprüche, bei der die Sicherheitsfunktion eine von der Steuereinheit (5) angesteuerte Abschaltfunktion für einen Verdichter des Kühlgeräts und/oder einen Lüfter (21) im Luftinnenkreis (10) des Kühlgeräts (2) aufweist.

7. Verfahren für den Betrieb einer Schaltschrankanordnung nach Anspruch 1 mit mindestens einem Schaltschrankgehäuse (1) und mindestens einem Kühlgerät (2), das mindestens einen Kältemittelkreislauf (3) mit einem brennbaren Kältemittel aufweist, wobei das Verfahren die Schritte aufweist:
- Kühlen der in der Schaltschrankanordnung aufgenommenen Luft mit dem Kühlgerät (2), wozu die Luft durch das Kühlgerät (2) hindurch geleitet wird;
- Überwachen einer Konzentration des brennbaren Kältemittels in der Luft auf das Überschreiten eines Grenzwertes; und
- Auslösen einer Sicherheitsfunktion zur Absenkung der Konzentration des brennbaren Kältemittels in der Luft unter den Grenzwert, wenn ein Überschreiten des Grenzwertes bei dem Überwachen erfasst worden ist,
wobei das Auslösen einer Sicherheitsfunktion das Betätigen eines Verschlussmechanismus (8) des Kühlgeräts (2) aufweist, über den ein zum Schaltschrankinnern geöffneter Lufteinlass (6) des Kühlgeräts (2) und ein zum Schaltschrankinnern geöffneter Luftauslass (7) des Kühlgeräts (2) verschlossen wird,
wobei das Betätigen des Belüftungsmechanismus (9) das Betätigen eines zwischen einer Offenstellung und einer Schließstellung verstellbaren Schließorgans (12, 16) zwischen einem Luftinnenkreis (10) und einem Luftaußenkreis (11) des Kühlgeräts (2) aufweist, wobei in der Schließstellung des Schließorgans (12,16) der Luftaußenkreis (11) und der Luftinnenkreis (10) fluidisch voneinander getrennt sind, wobei Umgebungsluft durch den Luftaußenkreis (11) und die in der Schaltschrankanordnung aufgenommene Luft durch den Luftinnenkreis (10) transportiert wird, und wobei in der Offenstellung des Schließorgans (12) Umgebungsluft von dem Luftaußenkreis (11) in den Luftinnenkreis (10) und aus dem Luftinnenkreis (10) in den Luftaußenkreis (11) und von dort in die Umgebung der Schaltschrankanordnung abgeführt wird,
wobei das Auslösen einer Sicherheitsfunktion das Betätigen eines Belüftungsmechanismus (9) aufweist, über den die Schaltschrankanordnung mit Umgebungsluft belüftet und die in der Schaltschrankanordnung aufgenommene Luft in die Umgebung der Schaltschrankanordnung abgeführt wird,
wobei in dem Luftinnenkreis (10) ein Luft-Kältemittel-Wärmetauscher (13) des Kältemittelkreislaufs (3) angeordnet ist, der an seiner Anströmseite (14) einen ersten der beiden Kältemittelsensoren (4) und an seine Abströmseite (15) einen zweiten der beiden Kältemittelsensoren (4) aufweist,
und wobei im Falle einer detektierten Leckage (24) die ebenfalls im Innern des Kühlgeräts (2) angeordnete Steuereinheit (5) den Verschlussmechanismus (8) ansteuert, sämtliche Luftdurchgangsöffnungen (6, 7) zwischen dem Innenkreis (10) des Kühlgeräts (2) und dem Innern des Schaltschrankgehäuses (1) abzuschließen, während der Schließorgan (12,16) des Belüftungsmechanismus (9) geöffnet wird, so dass ein Luftkurzschluss zwischen dem Innenkreis (10) und dem Außenkreis (11) des Kühlgeräts (2) hergestellt wird.

8. Verfahren nach Anspruch 7, bei dem das Auslösen einer Sicherheitsfunktion das Deaktivieren eines Lüfters (21) im Luftinnenkreis (10) des Kühlgeräts (2) und/oder das Deaktivieren eines Verdichters (20) des Kühlgeräts (2) aufweist.

## Claims

1. Switch cabinet arrangement having at least one switch cabinet housing (1) and at least one cooling unit (2) for cooling air accommodated in the switch cabinet arrangement, the cooling unit (2) having at least one refrigerant circuit (3) which has a flammable refrigerant, the switch cabinet arrangement having two refrigerant sensors (4) which detect a concentration of the flammable refrigerant in the air and are evaluated by a control unit (5) which is set up to trigger a safety function for lowering the concentration of the flammable refrigerant in the air below the limit value if a limit value of the concentration is exceeded, the
safety function having a locking mechanism (8) of the cooling unit (2), by means of which an air inlet (6) of the cooling unit (2) which is open to the interior of the switch cabinet and an air outlet (7) of the cooling unit (2) which is open to the interior of the switch cabinet can be closed,
wherein the safety function further comprises a ventilation mechanism (9) with at least one closing member (12, 16) adjustable between an air inner circuit (10) and an air outer circuit (11) of the cooling unit (2) between an open position and a closed position, wherein in the closed position of the closing member (12, 16) the air outer circuit (11) and the air inner circuit (10) are fluidically separated from each other
and wherein, in the open position of the closing member (12,16), ambient air is discharged from the air outer circuit (11) into the air inner circuit (10) and from the air inner circuit (10) into the air outer circuit (11) and from there into the environment of the switch cabinet arrangement,
the safety function comprising a venting and exhausting mechanism (17), via which the switch cabinet arrangement is ventilated with ambient air and the air taken up in the switch cabinet arrangement is discharged into the environment of the switch cabinet arrangement,
wherein an air refrigerant heat exchanger (13) of the refrigerant circuit (3) is arranged in the air inner circuit (10) which has a first of the two refrigerant sensors (4) on its inflow side (14) and a second of the two refrigerant sensors (4) on its outflow side (15),
and wherein, in the event of a leakage (24) detected with the aid of the refrigerant sensors (4), the control unit (5), which is likewise arranged in the interior of the cooling unit (2), can activate the locking mechanism (8), close off all the air passage openings (6, 7) between the inner circuit (10) of the cooling unit (2) and the inside of the cabinet housing (1), while opening the closing member (12,16) of the ventilation mechanism (9), so as to establish an air short-circuit between the inner circuit (10) and the outer circuit (11) of the cooling unit (2).

2. Switch cabinet arrangement according to claim 1, wherein the refrigerant sensors (4) comprise exactly one gas sensor with a single-channel signal output or several redundant gas sensors which have a single-channel signal output.

3. Switch cabinet arrangement according to claim 1 or 2, in which the refrigerant sensors (4) are arranged at an air inlet (6) of the cooling unit which is open to the interior of the control cabinet and at an air outlet (7) of the cooling unit (2) which is open to the interior of the control cabinet.

4. Switch cabinet arrangement according to claim 1, wherein the air refrigerant heat exchanger (13) of the refrigerant circuit (3) divides the air inner circuit (10) into a portion facing an inflow side (14) of the air refrigerant heat exchanger (13) and a portion facing an outflow side (15) of the air refrigerant heat exchanger (13), wherein the air outer circuit (11) can be opened via a first closing element (12) of the closing member (12, 16) to the section facing the inflow side (14) of the air refrigerant heat exchanger (13), and wherein the air outer circuit (11) can be opened via a second closing element (16) of the closing member (12,16) to the section facing the outflow side (15) of the air refrigerant heat exchanger (13).

5. Switch cabinet arrangement according to one of the preceding claims, in which the safety function has an inert gas supply (18) which can be opened to the interior of the switch cabinet arrangement via a valve (19) controlled by the control unit (5).

6. Switch cabinet arrangement according to any one of the preceding claims, in which the safety function comprises a shutdown function, controlled by the control unit (5), for a compressor of the cooling unit and/or a fan (21) in the air inner circuit (10) of the cooling unit (2).

7. Method for operating a control cabinet assembly according to claim 1 comprising at least one control cabinet housing (1) and at least one cooling unit (2) comprising at least one refrigerant circuit (3) with a flammable refrigerant, the method comprising the steps of:
- cooling the air received in the control cabinet assembly with the cooling unit (2), for which purpose the air is passed through the cooling unit (2);
- monitoring a concentration of the flammable refrigerant in the air for exceeding a limit value; and
- triggering of a safety function for lowering the concentration of the flammable refrigerant in the air below the limit value if an exceeding of the limit value has been detected during the monitoring,
wherein
the triggering of a safety function comprises the actuation of a locking mechanism (8) of the cooling unit (2), by means of which an air inlet (6) of the cooling unit open to the inside of the switch cabinet and an air outlet (7) of the cooling unit (2) open to the inside of the switch cabinet are closed,
the actuation of the ventilation mechanism (9) comprising the actuation of a closing member (12, 16) between an air inner circuit (10) and an air outer circuit (11) of the cooling unit (2), wherein in the closed position of the closing member (12,16) the air outer circuit (11) and the air inner circuit (10) are fluidically separated from each other, wherein ambient air is transported
through the air outer circuit (11) and the air received in the cabinet assembly is transported through the air inner circuit (10) and wherein, in the open position of the closing element (12), ambient air is discharged from the air outer circuit (11) into the air inner circuit (10) and from the air inner circuit (10) into the air outer circuit (11) and from there into the environment of the switch cabinet arrangement,
wherein the triggering of a safety function comprises the actuation of a ventilation mechanism (9) via which the switch cabinet arrangement is ventilated with ambient air and the air received in the switch cabinet arrangement is discharged into the environment of the switch cabinet arrangement,
wherein an air-refrigerant heat exchanger (13) of the refrigerant circuit (3) is arranged in the air inner circuit (10), which air-refrigerant heat exchanger (13) has a first of the two refrigerant sensors (4) on its upstream side (14) and a second of the two refrigerant sensors (4) on its outflow side (15)
and wherein, in the event of a detected leakage (24), the control unit (5), which is likewise arranged in the interior of the cooling unit (2), controls the locking mechanism (8) to close all air passage openings (6, 7) between the inner circuit (10) of the cooling unit (2) and the inside of the switch cabinet housing (1), while the closing member (12,16) of the ventilation mechanism (9) is opened, so that an air short-circuit is established between the inner circuit (10) and the outer circuit (11) of the cooling unit (2).

8. Method according to claim 7, wherein triggering a safety function comprises deactivating a fan (21) in the air inner circuit (10) of the cooling unit (2) and/or deactivating a compressor (20) of the cooling unit (2).

## Revendications

1. Aménagement d'armoire de commande avec au moins un boîtier d'armoire de commande (1) et
au moins un appareil de refroidissement (2) pour le refroidissement de l'air piégé dans l'aménagement d'armoire de commande, dans lequel l'appareil de refroidissement (2) comprend au moins un circuit de produit réfrigérant (3) qui comprend un produit réfrigérant combustible, dans lequel l'aménagement d'armoire de commande comprend deux capteurs de produit réfrigérant (4) qui mesurent une concentration en produit réfrigérant combustible et qui sont analysés par une unité de commande (5) qui est conçue pour déclencher, lors d'un dépassement d'une valeur limite de la concentration, une fonction de sécurité permettant de réduire la concentration en produit réfrigérant combustible dans l'air en dessous de la valeur limite,
dans lequel la fonction de sécurité comprend un mécanisme d'obturation (8) de l'appareil de refroidissement (2), par l'intermédiaire duquel une entrée d'air (6) de l'appareil de refroidissement (2), ouverte vers l'intérieur de l'armoire de commande, et une sortie d'air (7) de l'appareil de refroidissement (2), ouverte vers l'intérieur de l'armoire de commande, peuvent être obturées,
dans lequel la fonction de sécurité comprend en outre un mécanisme de ventilation (9) avec au moins un organe de fermeture (12, 16), disposé entre un circuit d'air interne (10) et un circuit d'air externe (11) de l'appareil de refroidissement (2) et réglable entre une position ouverte et une position fermée, dans lequel dans la position fermée de l'organe de fermeture (12, 16), le circuit d'air externe (11) et le circuit d'air interne (10) sont séparés fluidiquement l'une de l'autre et dans lequel, dans la position ouverte de l'organe de fermeture (12, 16), l'air ambiant est évacué du circuit d'air externe (11) vers le circuit d'air interne (10) et du circuit d'air interne (10) vers le circuit d'air externe (11) puis de là vers l'environnement de l'aménagement d'armoire de commande,
dans lequel la fonction de sécurité comprend un mécanisme de ventilation et de désaération (17) par l'intermédiaire duquel l'aménagement d'armoire de commande est ventilé avec de l'air ambiant et l'air contenu dans l'aménagement d'armoire de commande est évacué vers l'environnement de l'aménagement d'armoire de commande,
dans lequel, dans le circuit d'air interne (10), est disposé un échangeur thermique air-produit réfrigérant (13) du circuit de produit réfrigérant (3), qui comprend, sur son côté d'écoulement entrant (14), un premier des deux capteurs de produit réfrigérant (4) et sur son côté d'écoulement sortant (15), un deuxième des deux capteurs de produit réfrigérant (4),
et dans lequel, dans le cas d'une fuite (24) détectée à l'aide des capteurs de produit réfrigérant (4), l'unité de commande (5), également disposée à l'intérieur de l'appareil de refroidissement (2), peut contrôler le mécanisme d'obturation (8), afin d'obturer toutes les ouvertures de passage d'air (6, 7) entre le circuit interne (10) de l'appareil de refroidissement (2) et l'intérieur du boîtier d'armoire de commande (1), tandis que l'organe de fermeture (12, 16) du mécanisme de ventilation (9) est ouvert, de façon à ce qu'un court-circuit d'air soit créé entre le circuit interne (10) et le circuit externe (11) de l'appareil de refroidissement (2).

2. Aménagement d'armoire de commande selon la revendication 1, dans lequel les capteurs de produit réfrigérant (4) comprennent exactement un capteur de gaz avec une sortie de signaux mono-canal ou plusieurs capteurs de gaz redondants qui comprennent une sortie de signaux mono-canal.

3. Aménagement d'armoire de commande selon la revendication 1 ou 2, dans lequel les capteurs de produit réfrigérant (4) sont disposés sur une entrée d'air (6) de l'appareil de refroidissement, ouverte vers l'intérieur de l'armoire de commande et sur une sortie d'air (7) de l'appareil de refroidissement (2), ouverte vers l'intérieur de l'armoire de commande.

4. Aménagement d'armoire de commande selon la revendication 1, dans lequel l'échangeur thermique air-produit réfrigérant (13) du circuit de produit réfrigérant (3) divise le circuit d'air interne (10) en une portion orientée vers un côté d'écoulement entrant (14) de l'échangeur thermique air-produit réfrigérant (13) et une portion orientée vers un côté d'écoulement sortant (15) de l'échangeur thermique air-produit réfrigérant (13), dans lequel le circuit d'air externe (11) peut être ouvert, par l'intermédiaire d'un premier élément de fermeture (12) de l'organe de fermeture (12, 16), vers la portion orientée vers un côté d'écoulement entrant (14) de l'échangeur thermique air-produit réfrigérant (13) et dans lequel le circuit d'air externe (11) peut être ouvert, par l'intermédiaire d'un deuxième élément de fermeture (16) de l'organe de fermeture (12, 16), vers la portion orientée vers un côté d'écoulement sortant (15) de l'échangeur thermique air-produit réfrigérant (13).

5. Aménagement d'armoire de commande selon l'une des revendications précédentes, dans lequel la fonction de sécurité comprend une alimentation en gaz inerte (18) qui peut être ouverte vers l'intérieur de l'aménagement d'armoire de commande par l'intermédiaire d'une vanne (19) contrôlée par l'unité de commande (5).

6. Aménagement d'armoire de commande selon l'une des revendications précédentes, dans lequel la fonction de sécurité comprend une fonction de coupure contrôlée par l'unité de commande (5), pour un compresseur de l'appareil de refroidissement et/ou un ventilateur (21) dans le circuit d'air interne (10) de l'appareil de refroidissement (2).

7. Procédé de fonctionnement d'un aménagement d'armoire de commande selon la revendication 1, avec au moins un boîtier d'armoire de commande (1) et au moins un appareil de refroidissement (2), qui comprend au moins un circuit de produit réfrigérant (3) avec un produit réfrigérant combustible, dans lequel ce procédé comprend les étapes suivantes :
- refroidissement de l'air se trouvant dans l'aménagement d'armoire de commande avec l'appareil de refroidissement (2), l'air étant pour cela guidé à travers l'appareil de refroidissement (2) ;
- surveillance d'une concentration en produit réfrigérant combustible dans l'air afin de surveiller le dépassement d'une valeur limite ; et
- déclenchement d'une fonction de sécurité afin de réduire la concentration en produit réfrigérant combustible dans l'air en dessous de la valeur limite, lorsqu'un dépassement de la valeur limite a été détecté lors de la surveillance, dans lequel le déclenchement d'une fonction de sécurité comprend l'actionnement d'un mécanisme d'obturation (8) de l'appareil de refroidissement (2), par l'intermédiaire duquel une entrée (6) de l'appareil de refroidissement (2), ouverte vers l'intérieur de l'armoire de commande et une sortie d'air (7) de l'appareil de refroidissement (2), ouverte vers l'intérieur de l'armoire de commande sont obturées,
dans lequel l'actionnement du mécanisme de ventilation (9) comprend l'actionnement d'un organe de fermeture (12, 16) réglable entre une position ouverte et une position fermée, entre un circuit d'air interne (10) et un circuit d'air externe (11) de l'appareil de refroidissement (2), dans lequel, dans la position fermée de l'organe de fermeture (12, 16), le circuit d'air externe (11) et le circuit d'air interne (10) sont séparés fluidiquement l'un de l'autre, dans lequel l'air ambiant est transporté à travers le circuit d'air externe (11) et l'air se trouvant dans l'aménagement d'armoire de commande est transporté à travers le circuit d'air interne (10) et dans lequel, dans la position ouverte de l'organe de fermeture (12), l'air ambiant est évacué du circuit d'air externe (11) vers le circuit d'air interne (10) et du circuit d'air interne (10) vers le circuit d'air externe (11) puis de là vers l'environnement de l'aménagement d'armoire de commande,
dans lequel le déclenchement d'une fonction de sécurité comprend l'actionnement d'un mécanisme de ventilation (9), par l'intermédiaire duquel l'aménagement d'armoire de commande est ventilé avec l'air ambiant et l'air se trouvant dans l'aménagement d'armoire de commande est évacué vers l'environnement de l'aménagement d'armoire de commande,
dans lequel, dans le circuit d'air interne (10), est disposé un échangeur thermique air-produit réfrigérant (13) du circuit de produit réfrigérant (3), qui comprend, sur son côté d'écoulement entrant (14), un premier des deux capteurs de produit réfrigérant (4) et, sur son côté d'écoulement sortant (15), un deuxième des deux capteurs de produit réfrigérant (4),
et dans lequel, lors de la détection d'une fuite (24), l'unité de commande (5), également disposée à l'intérieur de l'appareil de refroidissement (2), contrôle le mécanisme d'obturation (8) afin d'obturer toutes les ouvertures de passage d'air (6, 7) entre le circuit interne (10) de l'appareil de refroidissement (2) et l'intérieur du boîtier d'armoire de commande (1), tandis que l'organe de fermeture (12, 16) du mécanisme de ventilation (9) est ouvert, de façon à ce qu'un court-circuit d'air soit créé entre le circuit interne (10) et le circuit externe (11) de l'appareil de refroidissement (2).

8. Procédé selon la revendication 7, dans lequel le déclenchement d'une fonction de sécurité comprend la désactivation d'un ventilateur (21) dans le circuit d'air interne (10) de l'appareil de refroidissement (2) et/ou la désactivation d'un compresseur (20) de l'appareil de refroidissement (2).
